(19)

Europäisches
Patentamt
European
Patent Office
Office européen
des brevets

(11) **EP 4 776 014 A1**

(12) **EUROPEAN PATENT APPLICATION**

(43) Date of publication:
**15.07.2026 Bulletin 2026/29**

(21) Application number: **25227893.2**

(22) Date of filing: **31.12.2025**

(51) International Patent Classification (IPC):
**G01S 5/02** *(2010.01)*     **G01S 5/10** *(2006.01)*

(52) Cooperative Patent Classification (CPC):
**G01S 5/10; G01S 5/0205; G01S 5/0215;**
G01S 5/0236

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **03.01.2025  KR 20250001205
25.06.2025  KR 20250084567**

(71) Applicant: **Samsung Electronics Co., Ltd.
Suwon-si, Gyeonggi-do 16677 (KR)**

(72) Inventors:
• **LEE, Yejin
  16677 Suwon-si (KR)**
• **SO, Jungho
  16677 Suwon-si (KR)**

(74) Representative: **Marks & Clerk LLP
15 Fetter Lane
London EC4A 1BW (GB)**

(54) **TERMINAL SUPPORTING OBSERVED TIME DIFFERENCE OF ARRIVAL (OTDOA)-BASED POSITIONING AND OPERATION METHOD THEREOF**

(57)     An operation method of a terminal supporting observed time difference of arrival (OTDOA)-based positioning includes measuring, based on a first measurement window, a first arrival time of a first positioning reference signal (PRS) received from a serving cell, adjusting a second measurement window for measuring a second arrival time of a second PRS received from a first neighbor cell, to generate an adjusted second measurement window, measuring the second arrival time, based on the adjusted second measurement window, and generating a first reference signal timing difference (RSTD) that is a difference between the first arrival time and the second arrival time.

FIG. 3

```
          ┌─────────┐
          │  START  │
          └─────────┘
               │
               ▼
┌─────────────────────────────────────────────────────┐
│ CONFIGURE FIRST MEASUREMENT WINDOW CORRESPONDING TO   │
│ SERVING CELL AND MEASURE, BASED ON THE CONFIGURED     │── S100
│ FIRST MEASUREMENT WINDOW FIRST ARRIVAL TIME OF FIRST  │
│ PRS TRANSMITTED FROM SERVING CELL                     │
└─────────────────────────────────────────────────────┘
               │
               ▼
┌─────────────────────────────────────────────────────┐
│ CONFIGURE SECOND MEASUREMENT WINDOW CORRESPONDING TO  │
│ FIRST NEIGHBOR CELL AND ADJUST SECOND MEASUREMENT     │── S110
│ WINDOW                                                │
└─────────────────────────────────────────────────────┘
               │
               ▼
┌─────────────────────────────────────────────────────┐
│ MEASURE, BASED ON ADJUSTED SECOND MEASUREMENT WINDOW, │
│ SECOND ARRIVAL TIME OF SECOND PRS RECEIVED FROM FIRST │── S120
│ NEIGHBOR CELL                                         │
└─────────────────────────────────────────────────────┘
               │
               ▼
┌─────────────────────────────────────────────────────┐
│ GENERATE FIRST RSTD BETWEEN SERVING CELL AND FIRST    │── S130
│ NEIGHBOR CELL BASED ON FIRST AND SECOND ARRIVAL TIMES │
└─────────────────────────────────────────────────────┘
               │
               ▼
          ┌─────────┐
          │   END   │
          └─────────┘
```

EP 4 776 014 A1

**Description**

BACKGROUND

The present disclosure relates to a positioning technique for measuring the position of a terminal, and more particularly, to a terminal supporting observed time difference of arrival (OTDOA)-based positioning.

Serving cells may use various positioning techniques to measure the position of a terminal. Among the various positioning techniques, OTDOA-based positioning techniques are defined in the 3GPP standard as techniques that can effectively measure the positions of terminals.

In order to support OTDOA-based positioning, the terminal may measure the arrival times of positioning reference signals (PRSs) received from a serving cell and neighbor cells, generate reference signal time differences (RSTDs) that correspond to a difference between the arrival times, and report the RSTDs to the serving cell. The serving cell may measure the position of the terminal, based on the RSTDs and a hyperbolic navigation method.

Meanwhile, in order to increase the accuracy of positioning, it is advantageous for the terminal to accurately measure the arrival time of PRSs received from neighbor cells.

SUMMARY

It is an aspect to provide a terminal capable of supporting high-performance OTDOA-based positioning by adjusting a measurement window used to measure the arrival times of PRSs received from neighbor cells and accurately measuring the arrival times of PRSs through the adjusted measurement window.

According to an aspect of one or more embodiments, there is provided an operation method of a terminal or method of operating a terminal supporting observed time difference of arrival (OTDOA)-based positioning, the operation method comprising measuring, based on a first measurement window, a first arrival time of a first positioning reference signal (PRS) received from a serving cell; adjusting a second measurement window for measuring a second arrival time of a second PRS received from a first neighbor cell, to generate an adjusted second measurement window; measuring the second arrival time, based on the adjusted second measurement window; and generating a first reference signal timing difference (RSTD) that is a difference between the first arrival time and the second arrival time.

According to another aspect of one or more embodiments, there is provided a terminal supporting observed time difference of arrival (OTDOA)-based positioning, the terminal comprising a radio frequency (RF) circuit configured to receive a first positioning reference signal (PRS) from a serving cell and a second PRS from a first neighbor cell; and a positioning circuit configured to measure a first arrival time of the first PRS, based on a first measurement window, measure a second arrival time of the second PRS, based on an adjusted second measurement window that has been adjusted by adjusting a second measurement window for measuring the second arrival time of the second PRS, and generate a first reference signal timing difference (RSTD). The first RSTD is a difference between the first arrival time and the second arrival time.

According to yet another aspect of one or more embodiments, there is provided an operation method of a terminal or method of operating a terminal supporting observed time difference of arrival (OTDOA)-based positioning, the operation method comprising configuring a first measurement window for measuring a first arrival time of a first positioning reference signal (PRS) received from a serving cell; configuring a second measurement window for measuring a second arrival time of a second PRS received from a first neighbor cell; configuring a third measurement window for measuring a third arrival time of a third PRS received from a second neighbor cell; and adjusting at least one of the second measurement window, based on the first measurement window to generate an adjusted second measurement window or the third measurement window, based on the first measurement window, to generate an adjusted third measurement window.

The operation method of a terminal or method of operating a terminal may comprise measuring arrival times during certain measurement windows. For example, the method may comprise measuring, during a first measurement window, a first arrival time of a first PRS signal received from a serving cell. For example, the method may comprise measuring, during an adjusted second measurement window, a second arrival time of a second PRS signal received from a first neighbor cell. The described positioning circuit may be similarly configured.

At least some of the above and other features of the disclosure are set out in the claims.

BRIEF DESCRIPTION OF THE DRAWINGS

Various embodiments will be more clearly understood from the following detailed description taken in conjunction with the accompanying drawings, in which:

FIG. 1 is a block diagram illustrating a wireless communication system according to an embodiment;
FIG. 2 is a block diagram schematically illustrating a terminal according to an embodiment;

FIG. 3 is a flowchart illustrating an operation method of a terminal according to an embodiment;

FIG. 4 is a diagram illustrating operation of a terminal according to a comparative example;

FIG. 5 is a diagram illustrating operation of a terminal according to an embodiment;

FIG. 6 is a flowchart specifically illustrating operations of the terminal in operation S120 of the flowchart of FIG. 3;

FIG. 7 is a diagram illustrating operation of a terminal according to an embodiment;

FIG. 8 is a flowchart illustrating an operation method of a terminal according to an embodiment;

FIG. 9 is a diagram illustrating operation of the terminal according to the flowchart of FIG. 8, according to an embodiment;

FIG. 10 is a flowchart illustrating an operation method of a terminal according to an embodiment;

FIG. 11 is a diagram illustrating operation of the terminal according to the flowchart of FIG. 10, according to an embodiment;

FIGS. 12A and 12B are diagrams illustrating operation of the terminal according to the flowchart of FIG. 10, according to some embodiments;

FIG. 13 is a message flowchart illustrating an operation method of a wireless communication system according to an embodiment; and

FIG. 14 is a block diagram schematically illustrating an electronic device according to an embodiment.

## DETAILED DESCRIPTION

Hereinafter, embodiments will be described in detail with reference to the accompanying drawings.

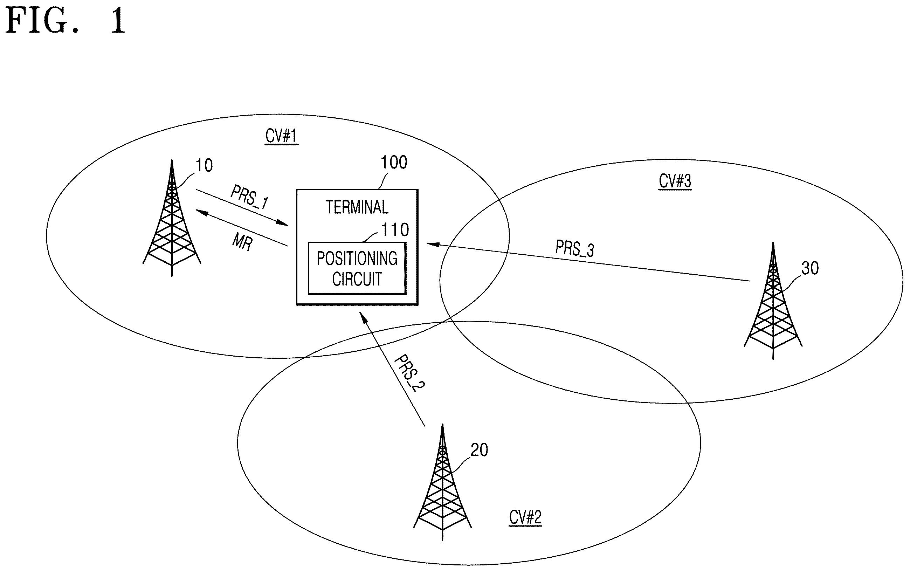

FIG. 1 is a block diagram illustrating a wireless communication system 1 according to an embodiment.

In the following, various embodiments are described with reference to a wireless communication system 1 based on a long term evolution (LTE) network, in particular in accordance with 3GPP releases, but the technical ideas herein are not limited to LTE networks, and the technical ideas may be applied to other wireless communication systems having a similar technical background or channel configuration (e.g., new radio (NR) (or 5G), wireless broadband (WiBro), a global system for mobile communication (GSM), cellular communication systems such as next generation communications such as 6G, etc. or near field communication systems such as Bluetooth, near field communication (NFC)).

Moreover, various functions described below may be implemented or supported by artificial intelligence technology or one or more computer programs, each of which consists of computer-readable program code and is embodied in a computer-readable medium. The terms "application" and "program" refer to one or more computer programs, software components, instruction sets, procedures, functions, objects, classes, instances, related data, or parts of them suitable for implementation of a suitable computer-readable program code. The term "computer-readable program code" includes all types of computer code, including source code, object code, and execution code. The term "computer-readable media" includes any type of media that may be accessed by a computer, such as read only memory (ROM), random access memory (RAM), hard disk drives, compact discs (CDs), digital video discs (DVDs), or any other type of memory. A "non-transitory" computer readable medium excludes wired, wireless, optical, or other communication links that transmit transitory electrical signals or other signals. A non-transitory computer readable medium includes media where data can be permanently stored and media where data can be stored and later overwritten, such as a rewritable optical disc or an erasable memory device.

In embodiments described below, a hardware approach will be described as an example. However, since the embodiments include technology that uses both hardware and software, the embodiments do not exclude a software-based approach.

Referring to FIG. 1, a wireless communication system 1 may include a serving cell 10, a first neighbor cell 20, a second neighbor cell 30, and a terminal 100. The serving cell 10 may generally refer to a fixed station in communication with the terminal 100 and/or the first neighbor cell 20 and the second neighbor cell 30, and may exchange control information and data by communicating with the terminal 100 and/or the first neighbor cell 20 and the second neighbor cell 30. For example, the serving cell 10, the first neighbor cell 20, and the second neighbor cell 30 may be referred to as base stations, Node Bs, evolved-Node Bs (eNBs), next generation Node Bs (gNBs), sectors, sites, base transceiver systems (BTS), access points (AP), relay nodes, remote radio heads (RRH), radio units (RU), small cells, wireless devices, devices, and the like. For example, the serving cell 10 may communicate with the terminal 100 within a first cell coverage CV#1 through a radio resource control connection. The first neighbor cell 20 may provide a communication service to the terminal within a second cell coverage CV#2, and the second neighbor cell 30 may provide a communication service to the terminal within a third cell coverage CV#3.

The terminal 100 may be fixed or mobile, and may refer to any device capable of transmitting and receiving data and/or control information in communication with the serving cell 10. For example, the terminal 100 may be referred to as a terminal, a mobile station, a mobile terminal, a user terminal, a wireless communication device, a wireless device, a device, a handheld device, a wearable device, or the like.

In the disclosure, the first neighbor cell 20 and the second neighbor cell 30 are inter-frequency cells, which correspond to neighbor cells that use a different frequency band from the serving cell 10, and the first neighbor cell 20 and the second neighbor cell 30 may transmit a second positioning reference signal (PRS) PRS_2 and a third PRS_RPS_3, respectively, to enable the serving cell 10 to measure (or, estimate) the position of the terminal 100.

For example, the transmission timing of the serving cell 10 for the first positioning reference signal (PRS) PRS_1, the transmission timing of the first neighbor cell 20 for the second PRS PRS_2, and the transmission timing of the second neighbor cell 30 for the third PRS PRS_3 may be synchronized with each other, and accordingly, the serving cell 10, the first neighbor cell 20, and the second neighbor cell 30 may transmit the first to third PRSs PRS_1, PRS_2, and PRS_3 through different frequency resources in a same subframe. Transmission timing may refer to the timing of each cell 10, 20, 30 transmitting their respective PRS PRS_1, PRS_2, PRS_3 to the terminal 100. However, this configuration and operation is only an example for helping understanding of various embodiments, and embodiments are not limited thereto.

For example, the serving cell 10 may provide the terminal 100 with observed time difference of arrival (OTDOA) assistance data including a PRS configuration index through a long term evolution (LTE) positioning protocol (LPP) message. The OTDOA assistance data may be defined as assistance information used for measuring the arrival time of the PRS in the terminal 100. The PRS configuration index may include a PRS period and a PRS subframe pattern with respect to the first to third PRS PRS_1, PRS_2, and PRS_3. As a specific example, the PRS period may indicate a transmission period of the first PRS PRS_1 of the serving cell 10, and the PRS subframe pattern may indicate from which subframe the first PRS PRS_1 is transmitted. The serving cell 10, the first neighbor cell 20, and the second neighbor cell 30 may use a same PRS configuration index. In some embodiments, the OTDOA assistance data may further include a measurement target cell list, time synchronization information, and the like. For example, in the configuration illustrated in FIG. 1, the measurement target cell list may indicate the serving cell 10, the first neighbor cell 20, and the second neighbor cell 30 for which the reference signal timing difference (RSTD) should be measured in the terminal 100, and the time synchronization information may indicate the transmission timing of the first PRS PRS_1 of the serving cell 10, the number of the subframe in which the first PRS PRS_1 is transmitted, and the like. However, this configuration and operation is only an example and embodiments are not limited thereto, and in some embodiments, the serving cell 10 may provide the terminal 100 with various information used for the terminal 100 to measure the first RSTD between the serving cell 10 and the first neighbor cell 20 and the second RSTD between the serving cell 10 and the second neighbor cell 30.

In an embodiment, the terminal 100 may include a positioning circuit 110 supporting OTDOA-based positioning. The positioning circuit 110 may receive the first to third PRS PRS_1, PRS_2, and PRS_3 based on the ODTOA assistance data provided from the serving cell 10, and measure the arrival times of the first to third PRS PRS_1, PRS_2, and PRS_3. Hereinafter, a specific example of the positioning circuit 110 for measuring the arrival time will be described.

The positioning circuit 110 may configure, based on the PRS configuration index provided from the serving cell 10, a first measurement window corresponding to the serving cell 10. The positioning circuit 110 may measure a first arrival time of the first PRS PRS_1 based on the first measurement window. For example, the positioning circuit 110 may perform a cross-correlation between the data belonging to the first measurement window and a reference sequence corresponding to the first PRS among the data of the subframe transmitting the first PRS PRS_1 from the serving cell 10, to measure a time having a largest cross-correlation value as the first arrival time. The positioning circuit 110 may measure a first arrival time of the first PRS PRS_1 during the first measurement window.

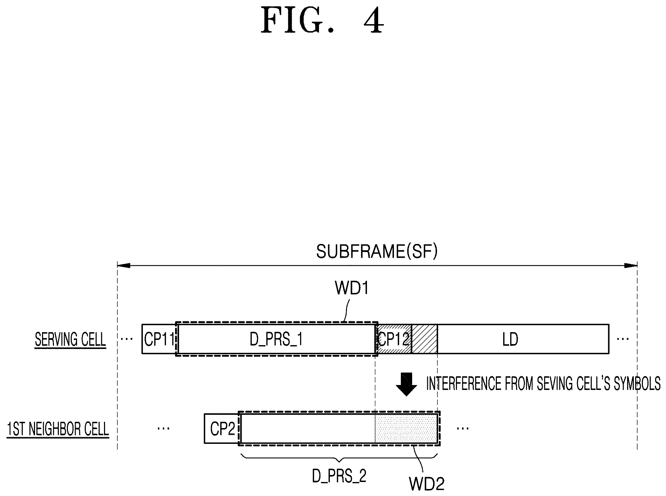

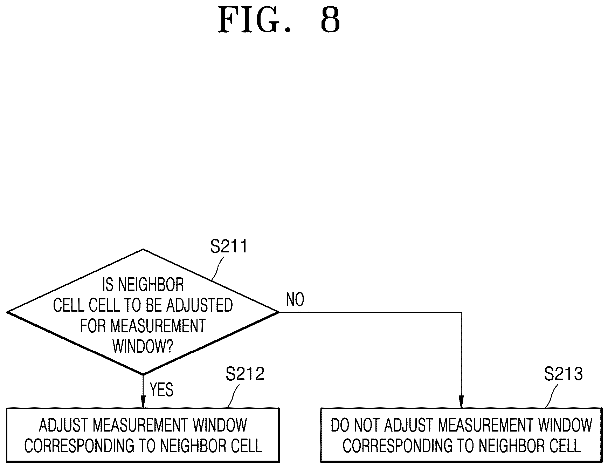

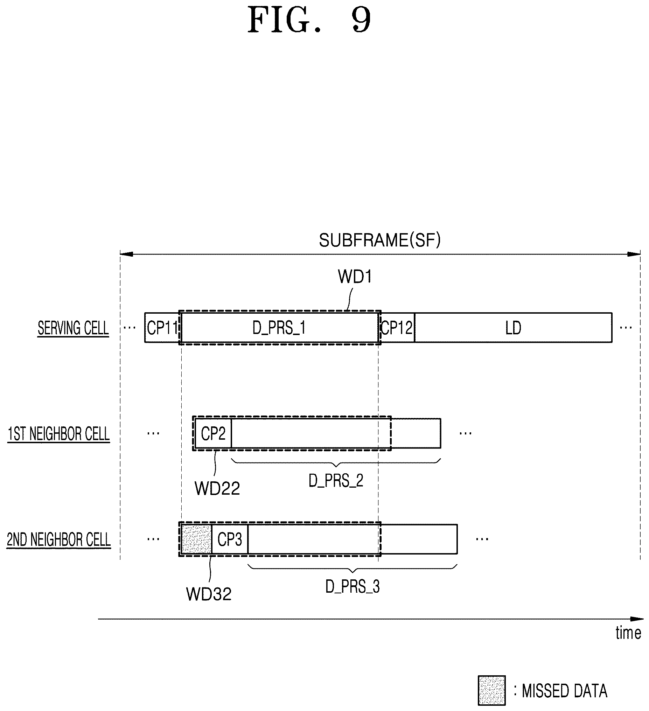

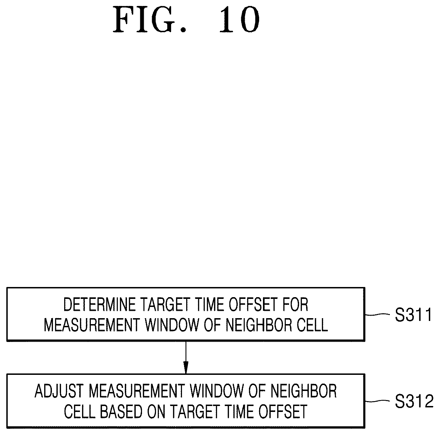

The positioning circuit 110 may configure, based on the first measurement window and a first relative time offset, a second measurement window corresponding to the first neighbor cell 20. The first relative time offset may correspond to a difference between an estimated arrival time of the first PRS PRS_1 of the serving cell 10 and an estimated arrival time of the second PRS PRS_2 of the first neighbor cell 20. The first relative time offset may be proportional to a distance between the first neighbor cell 20 and the terminal 100. The positioning circuit 110 may obtain the first relative time offset from the OTDOA assistance data or may estimate the first relative time offset based on a RSTD for the first neighbor cell 20 that was measured in the past. In an embodiment, the positioning circuit 110 may adjust the second measurement window. In the present disclosure, an operation of adjusting a measurement window may include an operation of shifting the measurement window in a specific direction with respect to a time axis. The positioning circuit 110 adjusts the second measurement window to alleviate interference from the serving cell caused by overlapping symbol timings and by broken orthogonality between subcarriers due to different PRS arrival timings between the serving cell 10 and the first neighbor cell 20, and the details will be described later with reference to FIG. 4. For example, the positioning circuit 110 may adjust the second measurement window to be closer to the first measurement window with respect to a time axis. For example, the positioning circuit 110 may adjust the second measurement window to generate an adjusted second measurement window so that the adjusted second measurement window is aligned with the first measurement window on a time axis. In some embodiments, the positioning circuit 110 may preferentially determine whether to adjust the second measurement window corresponding to the first neighbor cell 20, and a specific embodiment thereof will be described later with reference to FIGS. 8 and 9. In some embodiments, the positioning circuit 110 may adaptively control an adjustment degree of the second measurement window corresponding to the first neighbor cell 20, and a specific embodiment thereof will be described later with reference to FIGS. 10, 11, 12A, and 12B. In an embodiment, the positioning circuit 110 may measure the second arrival time of the second PRS PRS_2 based on the adjusted second measurement window. In an embodiment, the positioning circuit 110 may measure the second arrival time of the second PRS PRS_2 during the adjusted second measurement window. For example, the positioning circuit 110 may perform a circular correlation between data belonging to the adjusted second measurement window and a reference sequence corresponding to the second PRS PRS_2 among data of the subframe transmitting the second PRS PRS_2 from the first neighbor cell 20, and measure the second arrival time based on a result of the circular correlation. That is, the positioning circuit 110 may measure a time having a largest cyclic correlation value as the second arrival time. In an embodiment, the positioning circuit 110 may perform the cyclic correlation to measure the second arrival time to improve the measurement performance for the second arrival time by reducing a magnitude of a fake peak caused by a lack of frequency sampling rate when performing cross-correlation.

The positioning circuit 110 may configure, based on the second measurement window and a second relative time offset, a third measurement window corresponding to the second neighbor cell 30. The second relative time offset may correspond to a difference between the estimated arrival time of the first PRS PRS_1 of the serving cell 10 and an estimated arrival time of the third PRS PRS_3 of the second neighbor cell 30. The second relative time offset may be proportional to a distance between the second neighbor cell 30 and the terminal 100. The positioning circuit 110 may obtain the second relative time offset from the OTDOA assistance data or may estimate the second relative time offset based on the RSTD for the second neighbor cell 30 that has been measured in the past. In an embodiment, the positioning circuit 110 may adjust the third measurement window to generate an adjusted third measurement window. The positioning circuit 110 adjusts the third measurement window to alleviate interference from the serving cell caused by overlapping symbol timings and by breaking orthogonality between subcarriers due to different PRS arrival timings between the serving cell 10 and the second neighbor cell 30. For example, the positioning circuit 110 may adjust the third measurement window to generate the adjusted third measurement window so that the adjusted third measurement window may be closer to the first measurement window with respect to a time axis. For example, the positioning circuit 110 may adjust the third measurement window so that the adjusted third measurement window is aligned with the first measurement window on a time axis. In an embodiment, the positioning circuit 110 may collectively adjust the second measurement window corresponding to the first neighbor cell 20 and the third measurement window corresponding to the second neighbor cell 30 to generate the adjusted second measurement window and the adjusted third measurement window, respectively, or individually adjust the second measurement window and the third measurement window to generate the adjusted second measurement window and the adjusted third measurement window, respectively, in consideration of a state of the first neighbor cell 20 and a state of the second neighbor cell 30. In an embodiment, the positioning circuit 110 may measure a third arrival time of the third PRS PRS_3 based on the adjusted third measurement window. In an embodiment, the positioning circuit 110 may measure a third arrival time of the third PRS PRS_3 during the adjusted third measurement window. For example, the positioning circuit 110 may perform a circular correlation between data belonging to the adjusted third measurement window and a reference sequence corresponding to the third PRS PRS_3 among data of the subframe transmitting the third PRS PRS_3 from the second neighbor cell 30, and may measure the third arrival time based on a result of the circular correlation. That is, the positioning circuit 110 may measure a time having a largest circular correlation value as the third arrival time. In an embodiment, the positioning circuit 110 may perform the circular correlation to measure the third arrival time to improve a measurement performance for the third arrival time by reducing a magnitude of a fake peak caused by a lack of frequency sampling rate when performing cross-correlation.

The positioning circuit 110 may generate a first RSTD corresponding to the first neighbor cell 20 by calculating a difference between the first arrival time and the second arrival time, and generate a second RSTD corresponding to the second neighbor cell 30 by calculating a difference between the first arrival time and the third arrival time. Thereafter, the terminal 100 may transmit a measurement report MR including the first and second RSTDs to the serving cell 10.

For example, the serving cell 10 may measure a position of the terminal 100 by applying the first and second RSTDs included in the measurement report MR to a hyperbolic navigation method.

In an embodiment, the wireless communication system 1 may further include a third neighbor cell using the same frequency band as the serving cell 10 as an intra-frequency cell, and may receive a fourth PRS from the third neighbor cell. In this case, the terminal 100 may measure a fourth arrival time using or during a fourth measurement window without adjusting the fourth measurement window corresponding to the third neighbor cell to measure the fourth arrival time of the fourth PRS. In some embodiments, the terminal 100 may adjust the fourth measurement window to generate an adjusted fourth measurement window in a different manner from a neighbor cell, which is an inter-frequency cell, to measure the fourth arrival time of the fourth PRS, to then measure the fourth arrival time using the adjusted fourth measurement window. In other words, the terminal 100 may measure an arrival time of the PRS received from neighbor cells that are inter-frequency cells (e.g., the first and second neighbor cells 20 and 30) differently from a method of measuring an arrival time of the PRS received from a third neighbor cell that is an intra-frequency cell.

The terminal 100 according to an embodiment measures the second and third arrival times by adjusting the second and third measurement windows corresponding to the first and second neighbor cells 20 and 30 to generate the adjusted second measurement window and the adjusted third measurement window, respectively, so that the PRS arrival timing between the serving cell 10 and the first and second neighbor cells 20 and 30 is different from each other, and so that interference caused by the overlapping symbol timings between cells and the broken orthogonality between the subcarriers may be reduced, and as a result, the accuracy and reliability of the second and third arrival times may be improved.

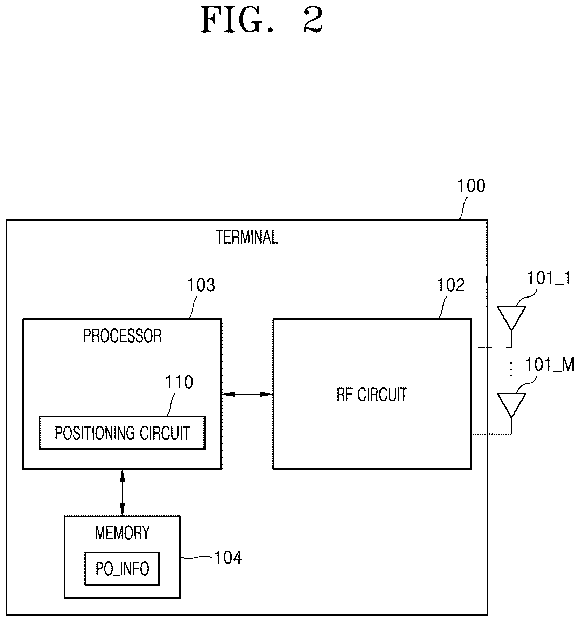

FIG. 2 is a block diagram schematically illustrating a terminal 100 according to an embodiment.

Referring to FIG. 2, a terminal 100 may include a plurality of antennas 101_1 to 101_M, an RF circuit 102, a processor 103, and a memory 104. The implementation example of the terminal 100 shown in FIG. 2 is only an example, and embodiments are not limited thereto, and in some embodiments, the terminal 100 may include more configurations.

The RF circuit 102 may support a function for transmitting and receiving signals using the plurality of antennas 101_1 to 101_M through a wireless channel. Specifically, the RF circuit 102 may perform digital-to-analog conversion and frequency upconversion operations on the baseband signal provided from the processor 103 to generate an RF signal and transmit the RF signal through the plurality of antennas 101_1 to 101_M. Furthermore, the RF circuit 102 may perform frequency downconversion and analog-to-digital conversion operations on RF signals received through the plurality of antennas 101_1 to 101_M to generate a baseband signal and provide the baseband signal to the processor 103.

For example, in an embodiment, the RF circuit 102 may include a transmission filter, a reception filter, a power amplifier, a low-noise amplifier, a mixer, an oscillator, a digital to analog converter (DAC), an analog to digit converter (ADC), and the like. In some embodiments, the RF circuit 102 may further include a plurality of RF chains, and may perform beamforming using the plurality of antennas 101_1 to 101_M. The RF circuit 102 may adjust the phase and magnitude of each of signals transmitted and received through the plurality of antennas 101_1 to 101_M for beamforming. In some embodiments, the RF circuit 102 may perform multi-input multi-output (MIMO), and may receive a plurality of layers when performing MIMO operations.

The processor 103 may include a central processing unit (CPU), a microprocessor, an application specific integrated circuit (ASIC), and/or hardware control logic coded to control overall operations for communication operations of the terminal 100. In an embodiment, the processor 103 may include the positioning circuit 110. As described in FIG. 1, the positioning circuit 110 may be configured to support OTDOA-based positioning. The positioning circuit 110 may generate RSTDs by measuring arrival times of PRSs received from a serving cell and neighbor cells using adjusted measurement windows as discussed herein and calculating a difference between the arrival times. The positioning circuit 110 may transmit a measurement report including RSTDs to the serving cell using the RF circuit 102 and the plurality of antennas 101_1 to 101_M.

In an embodiment, the positioning circuit 110 may adjust, based on a measurement window corresponding to the serving cell, a measurement window corresponding to a neighbor cell that is an inter-frequency cell among neighbor cells to generate an adjusted measurement window. The positioning circuit 110 may measure, based on or during the adjusted measurement window, the arrival time of the PRS received from the corresponding neighbor cell. In an embodiment illustrated in FIG. 2, the positioning circuit 110 is shown to be included in the processor 103 as a hardware configuration, but embodiments are not limited thereto, and, in some embodiments, the positioning circuit 110 may be implemented as a software configuration and stored in the memory 104 in the form of execution codes executed by the processor 103. In some embodiments, the positioning circuit 110 may be implemented as a combination of hardware and software configurations.

The memory 104 may provide a memory space used for the operation of the processor 103. In an embodiment, the memory 104 may store positioning information PO_INFO generated by the positioning circuit 110. In some embodiments, the positioning information PO_INFO may further include information used for the operation of the positioning circuit 110. For example, the positioning information PO_INFO may include OTDOA assistance data to be used by the positioning circuit 110. In some embodiments, the positioning information PO_INFO may include a plurality of reference sequences corresponding to a plurality of PRSs or RSTDs that have been generated in the past and stored in the memory 104 for each of neighbor cells.

The terminal 100 may perform operations according to embodiments to be described below using the positioning circuit 110. The operation of the positioning circuit or the operation of the processor may be understood as the operation of the terminal.

Before measuring the arrival time of the PRS received from a neighbor cell, which is an inter-frequency cell, the terminal 100 according to an embodiment may adjust the measurement window corresponding to the neighbor cell to generate an adjusted measurement window so that interference with the PRS of the neighbor cell generated by the signal received from the serving cell is alleviated. Accordingly, the terminal 100 may more accurately measure the arrival time of the PRS received from the neighbor cell and provide the measurement report based thereon to the serving cell, thereby improving the position measurement performance of the terminal 100 of the serving cell.

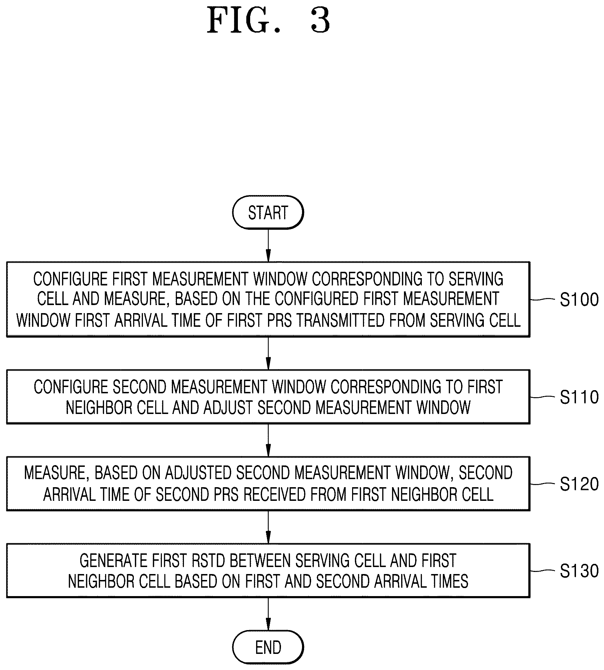

FIG. 3 is a flowchart illustrating an operation method of a terminal according to an embodiment. In FIG. 3, it is assumed that the first neighbor cell is an inter-frequency cell providing a communication service in a band different from that of the serving cell.

Referring to FIG. 3, the operation method of the terminal may include operations S100 to S130. In an embodiment, the operation method may be performed by the terminal 100.

In operation S100, the terminal 100 may configure a first measurement window corresponding to the serving cell and measure, based on the configured first measurement window, a first arrival time of a first PRS received from the serving cell. For example, the terminal 100 may configure the first measurement window to generate a configured first measurement window corresponding to the service cell and may measure the first arrival time of the first PRS received from the serving cell, based on or during the configured first measurement window. The terminal 100 may configure the first measurement window based on a subframe transmitting the first PRS in the serving cell. The terminal 100 may perform a cross-correlation between the data belonging to the first measurement window and the reference sequence corresponding to the first PRS, among the data of the corresponding subframe and measure the first arrival time based on a result of the cross-correlation. In some embodiments, operation S100 may be split into two operations. For example, the terminal 100 may configure a first measurement window corresponding to the serving cell. Following this configuration, the terminal 100 may measure, based on the configured first measurement window (e.g., during the first measurement window), a first arrival time of a first PRS received from the serving cell.

In operation S110, the terminal 100 may configure a second measurement window corresponding to the first neighbor cell and/or adjust the second measurement window. For example, the terminal 100 may configure a second measurement window corresponding to the first neighbor cell to generate a configured second measurement window and adjust the configured second measurement window to generate an adjusted second measurement window. The terminal 100 may configure the second measurement window based on the first measurement window and the first relative time offset. As described above, the first relative time offset may correspond to a difference between the estimated arrival time of the first PRS of the serving cell and the estimated arrival time of the second PRS of the first neighbor cell. The terminal 100 may obtain the first relative time offset from the OTDOA assistance data provided from the serving cell, or may estimate the first relative time offset based on the RSTD for the first neighbor cell that has been measured in the past. For example, the terminal 100 may adjust the second measurement window based on the first measurement window to generate the adjusted second measurement window. As a specific example, the terminal 100 may adjust the second measurement window such that the adjusted second measurement window is aligned with the first measurement window on a time axis. In some embodiments, the terminal 100 may adjust the second measurement window such that a time offset between the first measurement window and the adjusted second measurement window becomes a target time offset. The target time offset may be determined based on any one of a time offset between the first measurement window and the second measurement window or a channel state between the serving cell and the terminal. In some embodiments, the terminal 100 may simplify the operation by directly configuring the second measurement window corresponding to the adjusted second measurement window without performing the operation of adjusting the second measurement window in stages after configuring the second measurement window corresponding to the first neighbor cell.

In operation S120, the terminal 100 may measure, based on or during the adjusted second measurement window, the second arrival time of the second PRS received from the first neighbor cell. For example, the terminal 100 may perform a circular correlation between the data belonging to the adjusted second measurement window and the reference sequence corresponding to the second PRS among the data in the subframe transmitting the second PRS from the first neighbor cell, and measure the second arrival time based on a result of the circular correlation.

In operation S130, the terminal 100 may generate a first RSTD between the serving cell and the first neighbor cell based on the first arrival time and the second arrival time. Specifically, the terminal 100 may generate the first RSTD by subtracting the first arrival time from the second arrival time.

FIG. 4 is a diagram illustrating operation of a terminal according to a comparative example.

Referring to FIG. 4, in a comparative example, a subframe SF received by a terminal may include first PRS data D_PRS_1 received from a serving cell, a first cyclic prefix (CP) CP11 arranged at the front end of the first PRS data D_PRS_1, general data LD, and a second CP CP12 arranged in the front end of the general data LD.

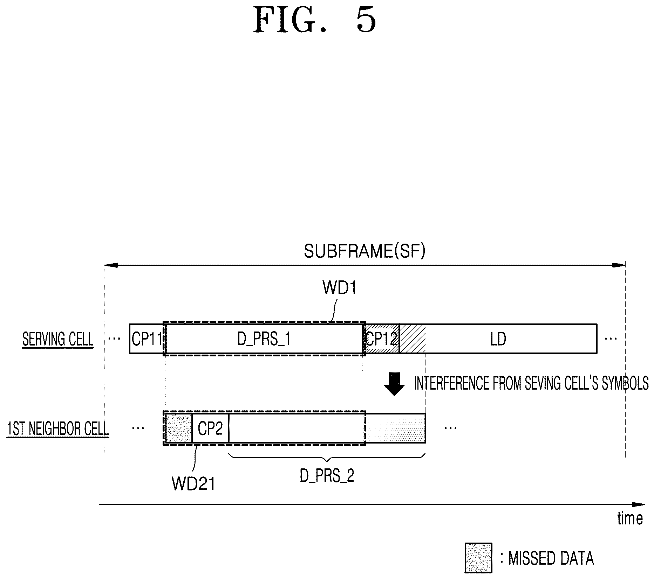

The subframes SF in FIGS. 5 to 7, 9, and 11 to 12B, which will be described later together with FIG. 4, are identified based on timing for signal processing in a terminal, and the subframes SF may correspond to subframes that transmit a first PRS, a second PRS, and a third PRS in a serving cell, a first neighbor cell, and a second neighbor cell.

In the disclosure, PRS data may be defined as data including at least one symbol constituting a PRS, and general data may be defined as data including symbols other than the at least one symbol of the PRS.

The first CP CP11 corresponds to the first PRS data D_PRS_1, and for accurate timing synchronization and interference mitigation when the terminal receives the first PRS data D_PRS_1, the serving cell may generate the first CP CP11 based on the first PRS data D_PRS_1.

The terminal may configure a first measurement window WD1 corresponding to the serving cell, and sequentially perform cross-correlation between the first PRS data D_PRS_1 that is data belonging to the first measurement window WD1 and the reference sequence corresponding to the first PRS to detect the first PRS in the first PRS data D_PRS_1, and measure a position on a time axis when the first PRS is detected as a first arrival time.

The terminal may configure a second measurement window WD2 corresponding to the first neighbor cell. The terminal may configure the second measurement window WD2 based on the first measurement window WD1 and the first relative time offset between the serving cell and the first neighbor cell. The terminal may detect the second PRS in the second PRS data D_PRS_2 by sequentially performing cross-correlation between the second PRS data D_PRS_2 which is data belonging to the second measurement window WD2 and the reference sequence corresponding to the second PRS, and may measure a position on a time axis when the second PRS is detected as a second arrival time.

When the terminal measures the second arrival time of the second PRS, symbols included in the second CP12 and a part of the general data LD may act as interference with a part of the second PRS data D_PRS_2 (i.e., part indicated by shading in WD2 in FIG. 4). When the terminal measures the second arrival time of the second PRS, the measurement may be based on Equation 1.

[Equation 1]

$$\mathbf{R}_{t,i}[m] = \sum_{n=0}^{N-1} y_i[n+m] \frac{x_{t,i}^{(*)}[n]}{\sqrt{P_t}}$$

In Equation 1, $\mathbf{R}_{t,i}[m]$ may correspond to a cross-correlation value when a time delay is $m$ for $t$, which denotes a first neighbor cell to a cell of a terminal, and i, which denotes an antenna. $y_i[n+m]$ may correspond to the second PRS data D_PRS_2 belonging to the second measurement window WD2, $x_{t,i}[n]$ may correspond to the reference sequence corresponding to the second PRS, and $P_t$ may correspond to the transmission power of the first neighbor cell. $N$ may correspond to a fast Fourier transform (FFT) magnitude corresponding to the subframe SF, and $m$ may indicate a time delay value. The terminal may configure $m$ to various values to obtain a plurality of cross-correlation values, and measure a second arrival time of a second PRS based on a value of $m$ corresponding to the largest value among the plurality of cross-correlation values.

An expected value E $[|\mathbf{R}_{t,i}[m]|^2]$ of the power of the cross-correlation may be defined by the following Equation 2.

[Equation 2]

$$\mathbf{E}\left[\left|\mathbf{R}_{t,i}[m]\right|^2\right] = \frac{P_t}{N}(N-m+\tau_t)^2 \left|\sum_k exp\left(\frac{j2\pi k(m-\tau_t)}{N}\right)\right|^2$$

$$+ \frac{P_t}{N^2}\left(\sum_{k \neq k'} g_N(k-k', N-m+\tau_t) + \sum_{k,k'} g_N(k-k', m-\tau_t)\right)$$

$$+ \frac{P_r}{N^2}\left(\sum_{k \neq k'} g_N(k-k', N-m) + \sum_{k,k'} g_N(k-k', m)\right)$$

In Equation 2, r denotes a serving cell, k denotes an index of a subcarrier allocated to the second PRS of the first neighbor cell, and $k'$ may denote an index of a subcarrier of the first PRS acting as an interference. $P_r$ may correspond to the transmission power of the serving cell. $\tau_t$ may correspond to a difference in arrival times between the first neighbor cell and the serving cell. In addition, $g_N$ may correspond to a power-related function associated with a cross-correlation in a noise/interference item.

In Equation 2, $\frac{P_t}{N}(N-m+\tau_t)^2 \left|\sum_k exp\left(\frac{j2\pi k(m-\tau_t)}{N}\right)\right|^2$ (hereinafter referred to as a first part) corresponds to the magnitude of a signal, and in general, m at a time point when the magnitude increases may be expected to be the arrival time of the second PRS of the first neighbor cell.

In Equation 2, $\frac{P_t}{N^2}\left(\sum_{k \neq k'} g_N(k-k', N-m+\tau_t) + \sum_{k,k'} g_N(k-k', m-\tau_t)\right)$ (hereinafter referred to as a second part) corresponds to an intra-frequency cell interference, and since the magnitude of the second part is usually much smaller than the magnitude of the first part, the second part may be ignored in measuring the second arrival time of the second PRS.

In Equation 2, $\frac{P_r}{N^2}\left(\sum_{k \neq k'} g_N(k-k', N-m) + \sum_{k,k'} g_N(k-k', m)\right)$ (hereinafter referred to as a third part) may correspond to an inter-frequency cell interference, $\sum_{k \neq k'} g_N(k - k', N - m)$ may correspond to an inter-carrier interference (ICI), which is an interference caused by breaking the orthogonality of subcarriers, and $\sum_{k,k'} g_N(k - k', m)$ may correspond to an inter-symbol interference (ISI), which is an interference by symbols of the serving cell. The ISI corresponding to the third part is generated due to simultaneously process signals transmitted from several cells in the subframe SF, and may cause a very large interference if the power difference between cells is large. In particular, because the position is estimated based on a distance difference between cells, the power difference between cells is large due to the distance difference, which may be a fatal interference as the distance difference becomes larger and the communication bandwidth becomes smaller.

In summary, the greater the distance between the first neighbor cell and the terminal, the higher the interference by symbols of the serving cell that occurs when the terminal measures the second arrival time of the second PRS, and as a result, the terminal may not be able to accurately measure the second arrival time of the second PRS due to the interference. To improve this performance due to interference and associated inaccurate measurement, various embodiments are described herein.

FIG. 5 is a diagram illustrating operation of a terminal according to an embodiment.

Referring to FIG. 5, the terminal 100 may adjust the second measurement window WD2 of FIG. 4 to generate an adjusted second measurement window WD21 such that the adjusted second measurement window WD21 is aligned with the first measurement window WD1 on a time axis. The terminal 100 may measure the second arrival time of the second PRS based on the adjusted second measurement window WD21.

Since the length of the missed data MISSED DATA missed by the adjusted second measurement window WD21 is shorter by the length of a third CP CP2 rather than the length of the data interfering from the serving cell (as in the comparative example of FIG. 4), measuring the second arrival time of the second PRS based on the adjusted second measurement window WD21 may be more accurate than measuring the second arrival time of the second PRS based on the second measurement window WD2 of FIG. 4.

In an embodiment, the terminal 100 may perform the circular correlation to compensate for missed data MISSED DATA. As a specific example, the terminal 100 may perform a circular correlation between a portion of the third CP CP2 and the second PRS data D_PRS_2 belonging to the adjusted second measurement window WD21 and a reference sequence corresponding to the second PRS, and may measure the second arrival time based on a result of the circular correlation.

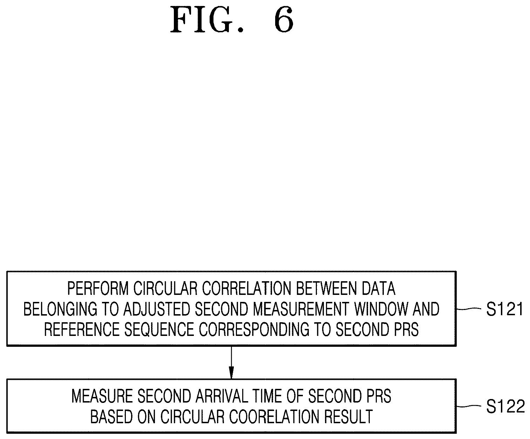

FIG. 6 is a flowchart specifically illustrating operations of the terminal in operation S120 of FIG. 3.

Referring to FIG. 6, the operation S120 of FIG. 3 may include operations S121 and S122.

In operation S121, the terminal 100 may perform a circular correlation between data belonging to the adjusted second measurement window and a reference sequence corresponding to the second PRS. For example, the data belonging to the adjusted second measurement window may include a portion of the third CP CP2 and the second PRS data D_PRS_2 of FIG. 5.

In operation S122, the terminal 100 may measure the second arrival time of the second PRS based on the circular correlation result.

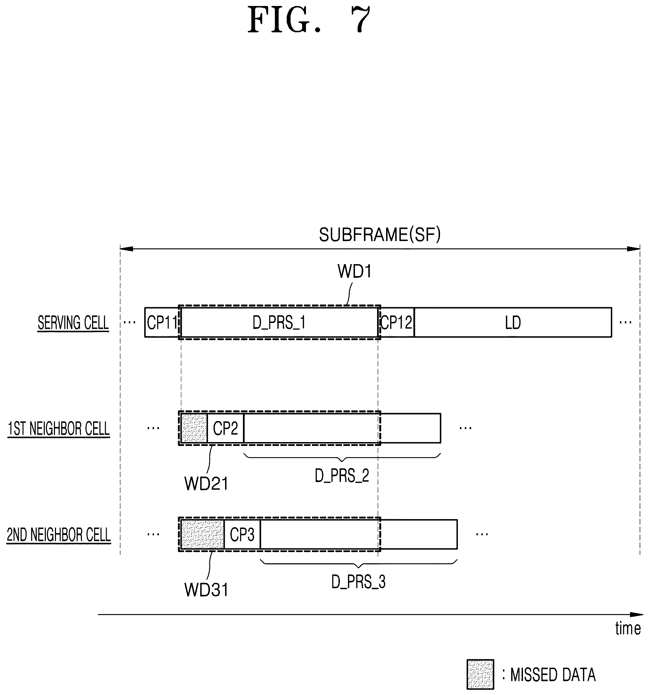

FIG. 7 is a diagram illustrating operation of a terminal according to an embodiment.

In FIG. 7, it is assumed that the second neighbor cell is an inter-frequency cell providing a communication service in a band different from that of the serving cell, and redundant descriptions to those of FIG. 5 are omitted for conciseness.

Referring to FIG. 7, the terminal 100 may configure a third measurement window corresponding to the second neighbor cell and adjust the third measurement window to generate an adjusted third measurement window WD31 such that the adjusted third measurement window WD31 is aligned with the first measurement window WD1 on a time axis. The terminal 100 may measure the third arrival time of the third PRS based on the adjusted third measurement window WD31.

In this way, the terminal 100 may collectively adjust the second measurement window WD2 corresponding to the first neighbor cell to generate the adjusted second measurement window WD21 and the third measurement window corresponding to the second neighbor cell to generate the adjusted third measurement window WD31 such that the adjusted second measurement window WD21 and the adjusted third measurement window WD31 are aligned with the first measurement window WD1. Accordingly, the adjusted second measurement window WD21 and the adjusted third measurement window WD31 may be aligned on a time axis. The second measurement window and the third measurement window may be spaced apart from the first measurement window by a same time offset in the time axis.

FIG. 8 is a flowchart illustrating an operation method of a terminal according to an embodiment.

Referring to FIG. 8, the operation method of the terminal may include operations S211 to S213.

In operation S211, the terminal 100 may determine whether a neighbor cell is a cell to be adjusted for a measurement window. In operation S211, the terminal 100 may determine whether a measurement window during which an arrival time of a PRS received from a neighbor cell is to be adjusted.

For example, the terminal 100 may determine, based on a relative time offset between the neighbor cell and the serving cell, whether the neighbor cell is a cell to be adjusted for a measurement window. Specifically, the terminal 100 may compare the relative time offset with a threshold to determine whether the neighbor cell as a cell to be adjusted for a measurement window and may determine the neighbor cell as the cell to be adjusted for the measurement window when the relative time offset exceeds a first threshold.

As another example, the terminal 100 may determine, based on a past RSTD for the neighbor cell, whether the neighbor cell is a cell to be adjusted for a measurement window. The past RSTD may correspond to a difference between a past measured arrival time corresponding to the serving cell and a past measured arrival time corresponding to the neighbor cell. Specifically, the terminal 100 may compare the past RSTD for the neighbor cell with a threshold to determine the neighbor cell as a cell to be adjusted for a measurement window when the past RSTD exceeds a second threshold.

When the neighbor cell is the cell to be adjusted (operation S211 is "Yes"), operation S212 is performed and the terminal 100 may adjust the measurement window corresponding to the neighbor cell to generate the adjusted measurement window.

When the neighbor cell is not the cell to be adjusted (operation S211 is "No"), operation S213 is performed and the terminal 100 may not adjust the measurement window corresponding to the neighbor cell.

FIG. 9 is a diagram illustrating operation of the terminal according to the flowchart of FIG. 8, according to an embodiment.

Referring to FIG. 9, the terminal 100 may determine that the first neighbor cell is not a cell to be adjusted for a measurement window based on the method illustrated in the flowchart of FIG. 8, and may determine the second neighbor cell as a cell to be adjusted for a measurement window.

Accordingly, when measuring the second arrival time of the first PRS of the first neighbor cell, the terminal 100 may use the initially configured second measurement window WD22. Furthermore, when measuring the third arrival time of the second PRS of the second neighbor cell, the terminal 100 may use an adjusted third measurement window WD32 that has been adjusted to align with the first measurement window WD1 on a time axis.

FIG. 10 is a flowchart illustrating an operation method of a terminal according to an embodiment.

Referring to FIG. 10, the operation method of the terminal may include operations S311 and S312.

In operation S311, the terminal 100 may determine a target time offset for a measurement window of a neighbor cell. For example, the terminal 100 may determine a target time offset between the measurement window of the neighbor cell and the measurement window of the serving cell based on at least one of a time offset (or a relative time offset of the neighbor cell) between the measurement window of the neighbor cell and the measurement window of the serving cell or a channel state between the serving cell and the terminal. Specifically, the terminal 100 may determine a target time offset having a smaller value as the channel state becomes more poor, or the terminal may determine a target time offset having a smaller value as the time offset between the measurement window of the neighbor cell and the measurement window of the serving cell increases. In an embodiment, the terminal 100 may determine the target time offset by considering the channel state and the time offset in combination.

However, this configuration and operation is merely an example embodiment, and embodiments are not limited thereto, and in some embodiments, the terminal may determine the target time offset in various ways.

In operation S312, the terminal may adjust the measurement window of the neighbor cell based on the target time offset to generate an adjusted measurement window. That is, the adjusted measurement window of the neighboring cell, that has been adjusted by the terminal, may be separated from the measurement window of serving cell along the time axis by the target time offset.

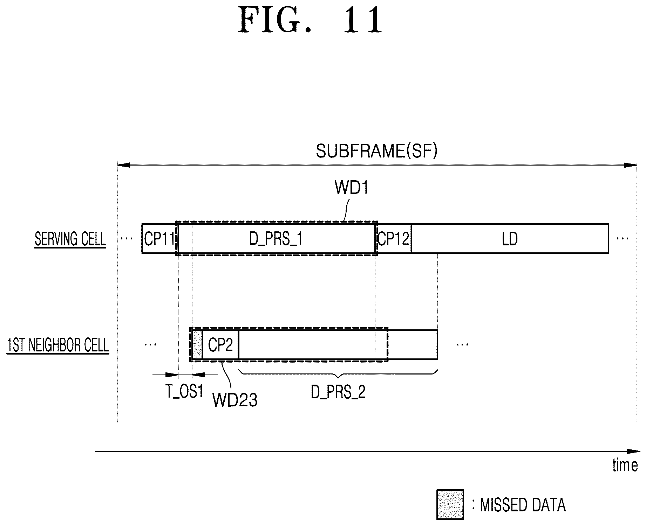

FIG. 11 is a diagram illustrating operation of the terminal according to the flowchart of FIG. 10, according to an embodiment.

Referring to FIG. 11, the terminal 100 may determine, based on the method illustrated in the flowchart of FIG. 10, a first target time offset T_OS1 between the first measurement window WD1 corresponding to the serving cell and the second measurement window (or the initially configured second measurement window) corresponding to the first neighbor cell. The terminal 100 may determine the first target time offset T_OS1 based on at least one of a channel state with respect to the serving cell and a time offset (or a relative time offset of the first neighbor cell) between the first measurement window WD1 and the second measurement window. Accordingly, the first target time offset T_OS1 may have a variable value.

The terminal 100 may adjust the second measurement window based on the determined first target time offset T_OS1 to generate an adjusted second measurement window WD23, and the adjusted second measurement window WD23 may fall on the time axis separated from the first measurement window WD1 by the first target time offset T_OS1.

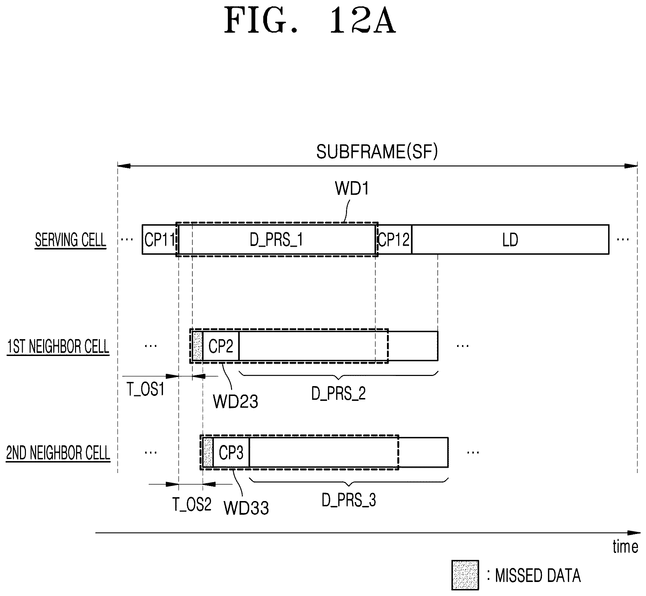

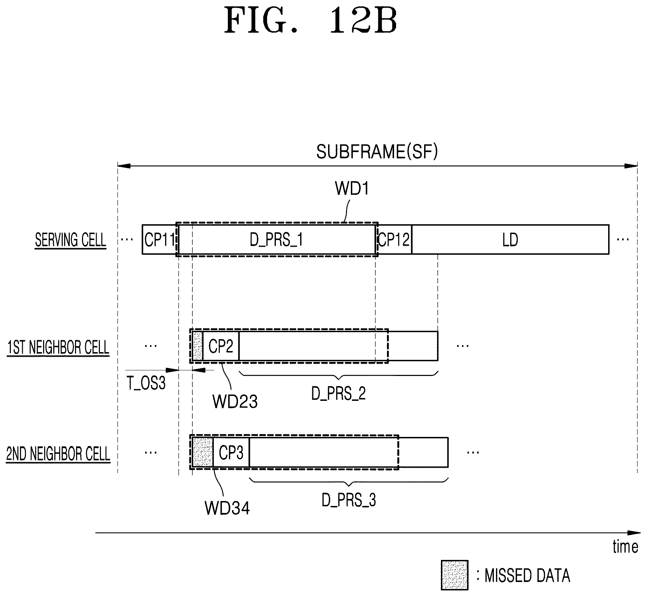

FIGS. 12A and 12B are diagrams illustrating operation of the terminal according to the flowchart of FIG. 10, according to some embodiments. In FIG. 12A, redundant descriptions to those of FIG. 11 are omitted for conciseness.

Referring to FIG. 12A, the terminal 100 may determine, based on the method illustrated in the flowchart of FIG. 10, a second target time offset T_OS2 between the first measurement window WD1 corresponding to the serving cell and the third measurement window (or the initially configured third measurement window) corresponding to the second neighbor cell. The terminal 100 may determine the second target time offset T_OS2 based on at least one of a channel state with respect to the serving cell or a time offset between the first measurement window WD1 and the third measurement window. Accordingly, the second target time offset T_OS2 may have a variable value.

The terminal 100 may adjust a third measurement window based on the determined second target time offset T_OS2 to generate the adjusted third measurement window WD33, and the adjusted third measurement window WD33 may fall on the time axis separated from the first measurement window WD1 by the second target time offset T_OS2.

The first target time offset T_OS1 and the second target time offset T_OS2 may be determined independently of each other, and thus the first target time offset T_OS1 and the second target time offset T_OS2 may be different from each other.

Referring further to FIG. 12B, the terminal 100 may determine a third target time offset T_OS3 commonly used to adjust the second measurement window corresponding to the first neighbor cell to generate the adjusted second measurement window and the third measurement window corresponding to the second neighbor cell to generate the adjusted third measurement window, based on the method illustrated in the flowchart of FIG. 10.

For example, the terminal 100 may determine, as the third target time offset T_OS3, a target time offset corresponding to a neighbor cell farther away from the terminal among the first neighbor cell and the second neighbor cell. For example, the terminal 100 may identify that the first neighbor cell is further away from the terminal 100 based on the past RSTD or based on a relative time offset of each of the first and second neighbor cells, and determine the target time offset determined based on the first neighbor cell as the third target time offset T_OS3.

As another example, the terminal 100 may determine the third target time offset T_OS3 in consideration of both the first neighbor cell and the second neighbor cell. In some embodiments, the terminal 100 may determine the third target time offset T_OS3 in various methods.

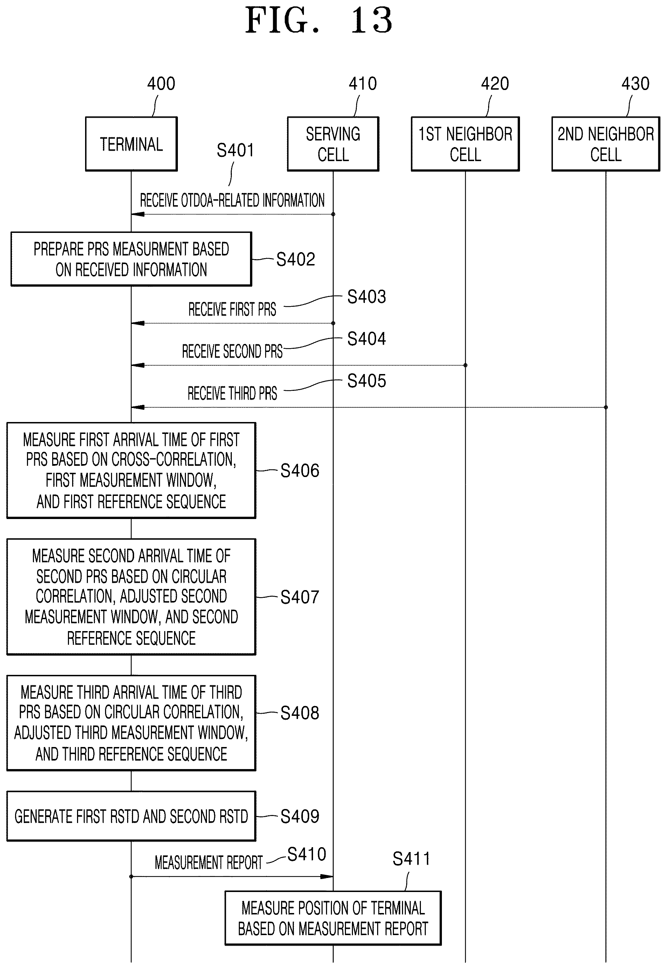

FIG. 13 is a message flowchart illustrating an operation method of a wireless communication system according to an embodiment. In FIG. 13, a wireless communication system may include a terminal 400, a serving cell 410, a first neighbor cell 420, and a second neighbor cell 430.

Referring to FIG. 13, an operation method of a wireless communication system may include operations S401 to S411.

In operation S401, the terminal 400 may receive OTDOA-related information from the serving cell 410. For example, the OTDOA-related information may include the OTDOA assistance data described in FIG. 1.

In operation S402, the terminal 400 may prepare a PRS measurement based on the received information. For example, the terminal 400 may identify the first neighbor cell 420 and the second neighbor cell 430 based on the received information, adjust the second measurement window corresponding to the first neighbor cell 420 to generate the adjusted second measurement window based on the first measurement window corresponding to the serving cell 410, and adjust the third measurement window corresponding to the second neighbor cell 430 to generate the adjusted third measurement window.

In operation S403, the terminal 400 may receive the first PRS from the serving cell 410, in operation S404, the terminal 400 may receive the second PRS from the first neighbor cell 420, and in operation S405, the terminal 400 may receive the third PRS from the second neighbor cell 430.

In operation S406, the terminal 400 may measure the first arrival time of the first PRS based on the cross-correlation, the first measurement window, and the first reference sequence. The first reference sequence is a reference sequence corresponding to the first PRS.

In operation S407, the terminal 400 may measure the second arrival time of the second PRS based on the circular correlation, the adjusted second measurement window, and the second reference sequence. The second reference sequence is a reference sequence corresponding to the second PRS.

In operation S408, the terminal 400 may measure the third arrival time of the third PRS based on the circular correlation, the adjusted third measurement window, and the third reference sequence. The third reference sequence is a reference sequence corresponding to the third PRS.

In operation S409, the terminal 400 may generate a first RSTD corresponding to a difference between the first arrival time and the second arrival time and a second RSTD corresponding to a difference between the first arrival time and the third arrival time.

In operation S410, the terminal 400 may transmit a measurement report including the first RSTD and the second RSTD to the serving cell 410.

In operation S411, the serving cell 410 may measure the position of the terminal 400 based on the measurement report.

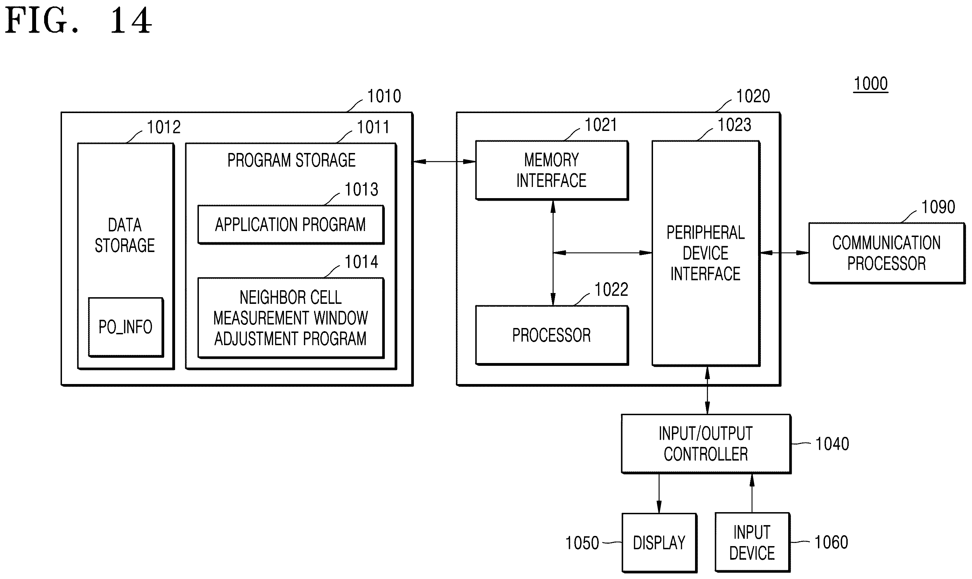

FIG. 14 is a block diagram schematically illustrating an electronic device 1000 according to an embodiment. The electronic device 1000 of FIG. 14 may correspond to the terminal 100 of FIG. 1 and the like.

Referring to FIG. 14, the electronic device 1000 may include a memory 1010, a processor device 1020, an input/output controller 1040, a display 1050, an input device 1060, and a communication processor 1090. Here, a plurality of memories 1010 may exist. Each component will be described as follows.

The memory 1010 may include a program storage 1011 that stores a program for controlling the operation of the electronic device 1000 and a data storage 1012 that stores data generated during program execution. The data storage 1012 may store data used for the operation of an application program 1013 and may store a neighbor cell measurement window adjustment program 1014. In an embodiment, the data storage 1012 may store positioning information PO_INFO used to adjust a measurement window corresponding to a neighbor cell according to embodiments. Furthermore, the data storage 1012 may further store data generated by the neighbor cell measurement window adjustment program 1014.

The program storage 1011 may include the application program 1013 and the neighbor cell measurement window adjustment program 1014. Here, the programs included in the program storage 1011 may be expressed as an instruction set of instructions. The application program 1013 may include program code for performing various applications operating in the electronic device 1000. That is, the application program 1013 may include code (or commands) related to various applications driven by a processor 1022. The neighbor cell measurement window adjustment program 1014 may include control codes for adjusting a measurement window corresponding to a neighbor cell according to an embodiment.

In an embodiment, the processor 1022 include a central processing unit (CPU), a microprocessor, an application specific integrated circuit (ASIC), and/or hardware control logic coded to adjust the measurement window corresponding to the neighbor cell by executing the neighbor cell measurement window adjustment program 1014. The processor 1022 may use the positioning information PO_INFO of the data storage 1012 when performing a corresponding operation. The processor 1022 may measure, based on the adjusted measurement window corresponding to the neighbor cell, an arrival time of the PRS received from the neighbor cell.

The electronic device 1000 may include the communication processor 1090 that performs a communication function for voice communication and data communication. The communication processor 1090 may include a main receiver and a low-power receiver for helping the operation of the main receiver.

A peripheral device interface 1023 may control a connection among the input/output controller 1040, the communication processor 1090, the processor 1022, and a memory interface 1021. The processor 1022 controls a plurality of cells to provide a corresponding service using at least one software program. In this case, the processor 1022 may execute at least one program stored in the memory 1010 to provide a service corresponding to the program.

The input/output controller 1040 may provide an interface between an input/output device such as the display 1050 and the input device 1060 and the peripheral device interface 1023. The display 1050 displays state information, input characters, moving pictures, and still pictures thereon. For example, the display 1050 may display application program information driven by the processor 1022.

The input device 1060 may provide input data generated by the selection of the electronic device 1000 to the processor device 1020 through the input/output controller 1040. In this case, the input device 1060 may include a keypad including at least one hardware button, a touch pad sensing touch information, and the like. For example, the input device 1060 may provide touch information such as touch, touch movement, and touch release sensed through the touch pad to the processor 1022 through the input/output control unit 1040.

While various embodiments have been particularly shown and described with reference to the drawings, it will be understood that various changes in form and details may be made therein without departing from the scope of the following claims.

Embodiments are set out in the following clauses:

Clause 1: An operation method of a terminal supporting observed time difference of arrival (OTDOA)-based positioning, the operation method comprising:

measuring, based on a first measurement window, a first arrival time of a first positioning reference signal (PRS) received from a serving cell;
adjusting a second measurement window for measuring a second arrival time of a second PRS received from a first neighbor cell, to generate an adjusted second measurement window;
measuring the second arrival time, based on the adjusted second measurement window; and
generating a first reference signal timing difference (RSTD) that is a difference between the first arrival time and the second arrival time.

Clause 2: The operation method of clause 1, wherein a time offset between the first measurement window and the second measurement window before the second measurement window is adjusted is greater than a time offset between the first measurement window and the adjusted second measurement window.

Clause 3: The operation method of clause 1 or 2, wherein the adjusting comprises adjusting the second measurement window such that the adjusted second measurement window is aligned with the first measurement window on a time axis.

Clause 4: The operation method of any preceding clause, wherein the adjusting comprises:

determining whether the first neighbor cell is a cell to be adjusted for a measurement window; and

adjusting the second measurement window, based on the first neighbor cell being the cell to be adjusted for the measurement window, to generate the adjusted second measurement window.

Clause 5: The operation method of clause 4, wherein the determining of whether the first neighbor cell is the cell to be adjusted comprises:

configuring the second measurement window;
measuring a time offset between the first measurement window and the second measurement window that is configured; and
determining the first neighbor cell as the cell to be adjusted for the measurement window, based on the time offset exceeding a first threshold.

Clause 6: The operation method of clause 4, wherein the determining of whether the first neighbor cell is the cell to be adjusted comprises determining the first neighbor cell as the cell to be adjusted for the measurement window, based on a relative time offset exceeding a second threshold,
wherein the relative time offset is an offset between the serving cell and the first neighbor cell and is received from the serving cell.

Clause 7: The operation method of clause 4, wherein the determining of whether the first neighbor cell is the cell to be adjusted comprises determining the first neighbor cell as the cell to be adjusted for the measurement window, based on a past RSTD for the first neighbor cell exceeding a second threshold.

Clause 8: The operation method of any preceding clause, wherein the adjusting comprises:

determining a target time offset between the first measurement window and the second measurement window, based on at least one of a time offset between the first measurement window and the second measurement window or a channel state between the serving cell and the terminal; and
adjusting the second measurement window, based on the target time offset, to generate the adjusted second measurement window.

Clause 9: The operation method of any preceding clause, wherein the measuring the second arrival time comprises:

performing a circular correlation between data corresponding to the adjusted second measurement window among received signals from the first neighbor cell and a reference sequence corresponding to the second PRS; and
measuring the second arrival time, based on a result of the circular correlation.

Clause 10: The operation method of any preceding clause, further comprising:

adjusting a third measurement window for measuring a third arrival time of a third PRS received from a second neighbor cell, to generate an adjusted third measurement window;
measuring the third arrival time, based on the adjusted third measurement window; and
generating a second RSTD that is a difference between the first arrival time and the third arrival time.

Clause 11: The operation method of clause 10, wherein the adjusted second measurement window is aligned with the adjusted third measurement window on a time axis.

Clause 12: The operation method of clause 11, wherein the adjusted second measurement window and the adjusted third measurement window are aligned with the first measurement window on the time axis.

Clause 13: The operation method of clause 11, wherein the adjusted second measurement window and the adjusted third measurement window are spaced apart from the first measurement window by a same time offset and are aligned with the first measurement window.

Clause 14: The operation method of any of clauses 10 to 13, further comprising transmitting RSTD information including the first RSTD and the second RSTD to the serving cell.

Clause 15: A terminal supporting observed time difference of arrival (OTDOA)-based positioning, the terminal comprising:

a radio frequency (RF) circuit configured to receive a first positioning reference signal (PRS) from a serving cell and a second PRS from a first neighbor cell; and

a positioning circuit configured to:

measure a first arrival time of the first PRS, based on a first measurement window,
measure a second arrival time of the second PRS, based on an adjusted second measurement window that has been adjusted by adjusting a second measurement window for measuring the second arrival time of the second PRS, and
generate a first reference signal timing difference (RSTD),

wherein the first RSTD is a difference between the first arrival time and the second arrival time.

**Claims**

1. An operation method of a terminal (100) supporting observed time difference of arrival, OTDOA,-based positioning, the operation method comprising:

measuring, based on a first measurement window (WD1), a first arrival time of a first positioning reference signal, PRS, (PRS_1) received from a serving cell (10);
adjusting a second measurement window (WD2) for measuring a second arrival time of a second PRS (PRS_2) received from a first neighbor cell (20), to generate an adjusted second measurement window (WD21);
measuring (S120) the second arrival time, based on the adjusted second measurement window (WD21); and
generating (S130) a first reference signal timing difference, RSTD, that is a difference between the first arrival time and the second arrival time.

2. The operation method of claim 1, wherein a time offset between the first measurement window (WD1) and the second measurement window (WD2) before the second measurement window (WD2) is adjusted is greater than a time offset between the first measurement window (WD1) and the adjusted second measurement window (WD21).

3. The operation method of claim 1 or 2, wherein the adjusting comprises adjusting the second measurement window (WD2) such that the adjusted second measurement window (WD21) is aligned with the first measurement window (WD1) on a time axis.

4. The operation method of any preceding claim, wherein the adjusting comprises:

determining (S211) whether the first neighbor cell (20) is a cell to be adjusted for a measurement window; and
adjusting (S212) the second measurement window (WD2), based on the first neighbor cell (20) being the cell to be adjusted for the measurement window, to generate the adjusted second measurement window (WD21).

5. The operation method of claim 4, wherein the determining (S211) of whether the first neighbor cell (20) is the cell to be adjusted comprises:

configuring the second measurement window (WD2);
measuring a time offset between the first measurement window (WD1) and the second measurement window (WD2) that is configured; and
determining the first neighbor cell (20) as the cell to be adjusted for the measurement window, based on the time offset exceeding a first threshold.

6. The operation method of claim 4, wherein the determining (S211) of whether the first neighbor cell (20) is the cell to be adjusted comprises determining the first neighbor cell (20) as the cell to be adjusted for the measurement window, based on a relative time offset exceeding a second threshold,
wherein the relative time offset is an offset between the serving cell (10) and the first neighbor cell (20) and is received from the serving cell (10).

7. The operation method of claim 4, wherein the determining (S211) of whether the first neighbor cell (20) is the cell to be adjusted comprises determining the first neighbor cell (20) as the cell to be adjusted for the measurement window, based on a past RSTD for the first neighbor cell (20) exceeding a second threshold.

8. The operation method of any preceding claim, wherein the adjusting comprises:

   determining (S311) a target time offset between the first measurement window (WD1) and the second measurement window (WD2), based on at least one of a time offset between the first measurement window (WD1) and the second measurement window (WD2) or a channel state between the serving cell (10) and the terminal (100); and adjusting (S312) the second measurement window (WD2), based on the target time offset, to generate the adjusted second measurement window (WD21).

9. The operation method of any preceding claim, wherein the measuring (S120) the second arrival time comprises:

   performing (S121) a circular correlation between data corresponding to the adjusted second measurement window (WD21) among received signals from the first neighbor cell (20) and a reference sequence corresponding to the second PRS (PRS_2); and
   measuring (S122) the second arrival time, based on a result of the circular correlation.

10. The operation method of any preceding claim, further comprising:

    adjusting a third measurement window for measuring a third arrival time of a third PRS (PRS_3) received from a second neighbor cell (30), to generate an adjusted third measurement window (WD31);
    measuring the third arrival time, based on the adjusted third measurement window (WD31); and
    generating a second RSTD that is a difference between the first arrival time and the third arrival time.

11. The operation method of claim 10, wherein the adjusted second measurement window (WD21) is aligned with the adjusted third measurement window (WD31) on a time axis.

12. The operation method of claim 11, wherein the adjusted second measurement window (WD21) and the adjusted third measurement window (WD31) are aligned with the first measurement window (WD1) on the time axis.

13. The operation method of claim 11, wherein the adjusted second measurement window (WD21) and the adjusted third measurement window (WD31) are spaced apart from the first measurement window (WD1) by a same time offset.

14. The operation method of any of claims 10 to 13, further comprising transmitting RSTD information including the first RSTD and the second RSTD to the serving cell (10).

15. A terminal (100) supporting observed time difference of arrival, OTDOA,-based positioning, the terminal (100) comprising:

    a radio frequency, RF, circuit (102) configured to receive a first positioning reference signal, PRS, (PRS_1) from a serving cell (10) and a second PRS (PRS_2) from a first neighbor cell (20); and
    a positioning circuit (110) configured to:

        measure a first arrival time of the first PRS (PRS_1), based on a first measurement window,
        measure (S120) a second arrival time of the second PRS (PRS_2), based on an adjusted second measurement window that has been adjusted by adjusting a second measurement window for measuring the second arrival time of the second PRS (PRS_2), and
        generate a first reference signal timing difference, RSTD,

    wherein the first RSTD is a difference between the first arrival time and the second arrival time.

# FIG. 1

# FIG. 2

# FIG. 3

START

CONFIGURE FIRST MEASUREMENT WINDOW CORRESPONDING TO SERVING CELL AND MEASURE, BASED ON THE CONFIGURED FIRST MEASUREMENT WINDOW FIRST ARRIVAL TIME OF FIRST PRS TRANSMITTED FROM SERVING CELL — S100

CONFIGURE SECOND MEASUREMENT WINDOW CORRESPONDING TO FIRST NEIGHBOR CELL AND ADJUST SECOND MEASUREMENT WINDOW — S110

MEASURE, BASED ON ADJUSTED SECOND MEASUREMENT WINDOW, SECOND ARRIVAL TIME OF SECOND PRS RECEIVED FROM FIRST NEIGHBOR CELL — S120

GENERATE FIRST RSTD BETWEEN SERVING CELL AND FIRST NEIGHBOR CELL BASED ON FIRST AND SECOND ARRIVAL TIMES — S130

END

# FIG. 4

SUBFRAME(SF)

WD1

SERVING CELL ··· | CP11 | D_PRS_1 | CP12 | | LD | ···

INTERFERENCE FROM SEVING CELL'S SYMBOLS

1ST NEIGHBOR CELL ··· | CP2 | | | ···

D_PRS_2  WD2

# FIG. 5

SUBFRAME(SF)

WD1

SERVING CELL  ⋯ CP11 D_PRS_1 CP12 LD ⋯

INTERFERENCE FROM SEVING CELL'S SYMBOLS

1ST NEIGHBOR CELL  ⋯ CP2 ⋯

WD21  D_PRS_2

time

▨ : MISSED DATA

# FIG. 6

| PERFORM CIRCULAR CORRELATION BETWEEN DATA BELONGING TO ADJUSTED SECOND MEASUREMENT WINDOW AND REFERENCE SEQUENCE CORRESPONDING TO SECOND PRS |
|---|

— S121

| MEASURE SECOND ARRIVAL TIME OF SECOND PRS BASED ON CIRCULAR COORELATION RESULT |
|---|

— S122

# FIG. 7

# FIG. 8

S211

IS NEIGHBOR
CELL CELL TO BE ADJUSTED
FOR MEASUREMENT
WINDOW?

NO

YES    S212

ADJUST MEASUREMENT WINDOW
CORRESPONDING TO NEIGHBOR CELL

S213

DO NOT ADJUST MEASUREMENT WINDOW
CORRESPONDING TO NEIGHBOR CELL

# FIG. 9

**EP 4 776 014 A1**

# FIG. 10

| DETERMINE TARGET TIME OFFSET FOR MEASUREMENT WINDOW OF NEIGHBOR CELL | S311 |

| ADJUST MEASUREMENT WINDOW OF NEIGHBOR CELL BASED ON TARGET TIME OFFSET | S312 |

25

# FIG. 11

# FIG. 12A

# FIG. 12B

# FIG. 13

# FIG. 14

EP 4 776 014 A1

## EUROPEAN SEARCH REPORT

Europäisches
Patentamt
European
Patent Office
Office européen
des brevets

**Application Number**

EP 25 22 7893

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/228381 A1 (MANOLAKOS ALEXANDROS [US] ET AL) 16 July 2020 (2020-07-16) * par. 93-131 * ----- | 1-15 | INV. G01S5/02 G01S5/10 |
| A | US 2023/269048 A1 (KUMAR MUKESH [IN] ET AL) 24 August 2023 (2023-08-24) * the whole document * ----- | 1-15 | |
| A | WO 2022/066391 A1 (QUALCOMM INC [US]) 31 March 2022 (2022-03-31) * the whole document * ----- | 1-15 | |

**TECHNICAL FIELDS SEARCHED (IPC)**

G01S

The present search report has been drawn up for all claims

| Place of search | Date of completion of the search | Examiner |
|---|---|---|
| Munich | 28 May 2026 | González Moreno, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 7893

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2026

| Patent document cited in search report | Publication date | Patent family member(s) | | Publication date |
|---|---|---|---|---|
| US 2020228381 A1 | 16-07-2020 | CN | 113227820 A | 06-08-2021 |
| | | EP | 3908848 A1 | 17-11-2021 |
| | | US | 2020228381 A1 | 16-07-2020 |
| | | WO | 2020146839 A1 | 16-07-2020 |
| US 2023269048 A1 | 24-08-2023 | CN | 116671194 A | 29-08-2023 |
| | | EP | 4223028 A1 | 09-08-2023 |
| | | KR | 20230078650 A | 02-06-2023 |
| | | US | 2023269048 A1 | 24-08-2023 |
| | | US | 20260074862 A1 | 12-03-2026 |
| | | WO | 2022071989 A1 | 07-04-2022 |
| WO 2022066391 A1 | 31-03-2022 | CN | 116325987 A | 23-06-2023 |
| | | EP | 4218314 A1 | 02-08-2023 |
| | | US | 2024012085 A1 | 11-01-2024 |
| | | WO | 2022066391 A1 | 31-03-2022 |

EPO FORM P0459

For more details about this annex : see Official Journal of the European Patent Office, No. 12/82